# EUROPEAN PATENT SPECIFICATION

(11) **EP 4 133 393 B1**
(45) Date of publication and mention of the grant of the patent: **06.08.2025**
(21) Application number: 20720135.1
(22) Date of filing: 10.04.2020
(51) Int. Cl.: G06F 21/62, H04L 9/32, G06Q 30/018, G06Q 30/0601, H04L 9/40, H04L 9/00, H04W 12/02

(54) **PRIVACY ENFORCER**
DATENSCHUTZ-UMSETZER
MOYEN D'APPLICATION DE CONFIDENTIALITÉ

(43) Date of publication of application: 15.02.2023
(73) Proprietor: Telefonaktiebolaget LM Ericsson (PUBL), 164 83 Stockholm (SE)
(72) Inventor: GAVITA, Edoardo, Laval, Québec H7M 4N4 (CA); PAPALEONIDOPOULOS, George, Laval, Québec H7G 4Y6 (CA); DONG, Taofei, Pierrefonds, Québec H9K 0A2 (CA)
(74) Representative: Ericsson
(86) International application number: PCT/IB2020/053455
(87) International publication number: WO 2021/205215

(56) References cited:
- US-A1- 2019 014 116
- US-A1- 2019 147 477
- US-A1- 2020 026 834
- US-A1- 2020 074 113

## Description

### TECHNICAL FIELD

The present disclosure relates to network communications and in particular, to a privacy enforcer.

### BACKGROUND

As the amount of data transmitted over networks by users continues to grow, the ability to maintain privacy of users' data and, in particular, to enforce privacy regulation over such data presents a challenge. For example, the General Data Protection Regulation (GDPR) has proposed a regulation called the "Right to be Forgotten" which allows a user to request to have the user's data deleted, for example from various public social media or other sites. However, existing networks do not provide efficient procedures or methodologies to handle such end user data deletion requests and/or to otherwise enforce data privacy rules. US 2019/0014116 A1 discloses a system and method for authentication, authorization, and access management based on personally identifiable information and data sets pertaining to individual identity and its attributes within independent computer systems and digital networks.

### SUMMARY

Some embodiments advantageously provide methods and apparatuses for a privacy enforcer. The invention is defined by the independent claims. Optional features are defined by the dependent claims.

According to one aspect of the present disclosure, a method implemented in a data protection broker node is provided. The method includes performing a bootstrap operation between a user and the data protection broker node, to initialize a blockchain; as a result of the bootstrap operation, obtaining a trusted temporary public identifier identifying the user; receiving a request for a new transaction associated with the user and joining the new transaction to the blockchain; and authorizing the user to use the trusted temporary public identifier to perform a user transaction to protect a privacy of the user's data.

In some embodiments of this aspect, the trusted temporary public identifier is a hashed value. In some embodiments of this aspect, the method further includes sending the trusted temporary public identifier to the user to anonymously register the user to at least one third-party service provider. In some embodiments of this aspect, the method further includes receiving an identifier from the at least one third-party service provider; and when the received identifier matches the trusted temporary public identifier, recording at least one activity of the user transaction involving the user's data in the blockchain. The method further includes adding a smart contract to the blockchain, the smart contract being associated to the trusted temporary public identifier; using the trusted temporary public identifier to map the smart contract to the user's data; and executing the smart contract to control access, by at least one third-party service provider, to at least part of the user's data during the user transaction and according to at least one term of the smart contract.

In some embodiments of this aspect, the at least one term of the smart contract includes at least one self-executing term to handle delivery of a product ordered during the user transaction to the user's physical mailing address. In some embodiments of this aspect, the at least one self-executing term includes: when a predetermined destination code is received from a third-party delivery service provider, providing the third-party delivery service provider with the user's physical mailing address, the destination code being different from the user's physical mailing address. Executing the smart contract further includes participating in the user transaction by communicating with at least one of at least one third-party service provider on behalf of the user according to the at least one term of the smart contract. In some embodiments of this aspect, the at least one term of the smart contract includes at least one of: at least one type of personal information; at least one third-party service provider; and at least one rule for electronic access to the at least one type of personal information by the at least one third-party service provider.

In some embodiments of this aspect, the at least one rule further includes restricting electronic access to at least one of the at least one type of personal information by one of the at least one third-party service provider; and permitting electronic access to at least another of the at least one type of personal information by the one of the at least one third-party service provider. In some embodiments of this aspect, the at least one term of the smart contract is set by the user to control access to the user's data by the at least one third-party service provider participating in the user transaction. In some embodiments of this aspect, the method further includes responsive to receiving a request from one of the at least one third-party service provider to verify a purchase amount for the user transaction, using the obtained trusted temporary public identifier to verify the purchase amount with a financial institution associated with the user.

In some embodiments of this aspect, the method further includes receiving, from one of the at least one third-party service provider, a request to receive at least part of the user's data, the request indicating the trusted temporary public identifier that is associated to the user's data; mapping the indicated trusted temporary public identifier to the user; determining whether the user consents to providing the at least the requested part of the user's data to the one of the at least one third-party service provider; and based at least in part on the determination of the user consent, one of providing and not providing the at least the requested part of the user's data to the one of the at least one third-party service provider. In some embodiments of this aspect, the user's data includes personal information of the user that is used during the user transaction. In some embodiments of this aspect, the personal information includes at least one of a first name, a last name, a physical address, an email address, a telephone number, a social security number, bank account information, credit card information, a driver's license number and a health insurance number.

According to another aspect of the present disclosure, a data protection broker node is provided. The data protection broker node includes processing circuitry. The processing circuitry is configured to cause the data protection broker node to perform a bootstrap operation between a user and the data protection broker node, to initialize a blockchain. The processing circuitry is configured to cause the data protection broker node to, as a result of the bootstrap operation, obtain a trusted temporary public identifier identifying the user. The processing circuitry is configured to cause the data protection broker node to receive a request for a new transaction associated with the user and join the new transaction to the blockchain. The processing circuitry is configured to cause the data protection broker node to authorize the user to use the trusted temporary public identifier to perform a user transaction to protect a privacy of the user's data.

In some embodiments of this aspect, the trusted temporary public identifier is a hashed value. In some embodiments of this aspect, the processing circuitry is further configured to cause the data protection broker node to send the trusted temporary public identifier to the user to anonymously register the user to at least one third-party service provider. In some embodiments of this aspect, the processing circuitry is further configured to cause the data protection broker node to receive an identifier from the at least one third-party service provider; and when the received identifier matches the trusted temporary public identifier, record at least one activity of the user transaction involving the user's data in the blockchain. The processing circuitry is further configured to cause the data protection broker node to add a smart contract to the blockchain, the smart contract being associated to the trusted temporary public identifier; use the trusted temporary public identifier to map the smart contract to the user's data; and execute the smart contract to control access, by at least one third-party service provider, to at least part of the user's data during the user transaction and according to at least one term of the smart contract.

In some embodiments of this aspect, the at least one term of the smart contract includes at least one self-executing term to handle delivery of a product ordered during the user transaction to the user's physical mailing address. In some embodiments of this aspect, the at least one self-executing term includes when a predetermined destination code is received from a third-party delivery service provider, provide the third-party delivery service provider with the user's physical mailing address, the destination code being different from the user's physical mailing address. The processing circuitry is configured to execute the smart contract by being configured to participate in the user transaction by communicating with at least one of at least one third-party service provider on behalf of the user according to the at least one term of the smart contract.

In some embodiments of this aspect, the at least one term of the smart contract includes at least one of: at least one type of personal information; at least one third-party service provider; and at least one rule for electronic access to the at least one type of personal information by the at least one third-party service provider. In some embodiments of this aspect, the at least one rule further includes restricting electronic access to at least one of the at least one type of personal information by one of the at least one third-party service provider; and permitting electronic access to at least another of the at least one type of personal information by the one of the at least one third-party service provider. In some embodiments of this aspect, the at least one term of the smart contract is set by the user to control access to the user's data by the at least one third-party service provider participating in the user transaction.

In some embodiments of this aspect, the processing circuitry is further configured to cause the data protection broker node to responsive to receiving a request from one of the at least one third-party service provider to verify a purchase amount for the user transaction, use the obtained trusted temporary public identifier to verify the purchase amount with a financial institution associated with the user. In some embodiments of this aspect, the processing circuitry is further configured to cause the data protection broker node to receive, from one of the at least one third-party service provider, a request to receive at least part of the user's data, the request indicating the trusted temporary public identifier that is associated to the user's data; map the indicated trusted temporary public identifier to the user; determine whether the user consents to providing the at least the requested part of the user's data to the one of the at least one third-party service provider; and based at least in part on the determination of the user consent, one of provide and not provide the at least the requested part of the user's data to the one of the at least one third-party service provider.

In some embodiments of this aspect, the user's data includes personal information of the user that is used during the user transaction. In some embodiments of this aspect, the personal information includes at least one of a first name, a last name, a physical address, an email address, a telephone number, a social security number, bank account information, credit card information, a driver's license number and a health insurance number.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 illustrates an example system architecture according to some embodiments of the present disclosure;
FIG. 2 is a flowchart of an example process in a privacy enforcer node according to some embodiments of the present disclosure;
FIG. 3 is a call flow diagram illustrating an example process for user sign-up/registration according to some embodiments of the present disclosure;
FIG. 4 is a call flow diagram illustrating an example process for a user purchasing transaction according to some embodiments of the present disclosure; and
FIG. 5 is a call flow diagram illustrating an example process for authorized provision of user data according to some embodiments of the present disclosure.

### DETAILED DESCRIPTION

Some embodiments of the present disclosure provide a solution that may be used for data privacy enforcement by e.g., GDPR authorities, which may ensure the end user's desire/option/preference to protect private data that has been determined by interactions between the end user and one or more service providers, i.e., an entity rendering a service e.g., bank, e-commerce/online shopping, delivery service, etc. to the user.

Some embodiments of the present disclosure may be implemented via a data protection broker node, e.g., GDPR data broker. The GDPR data broker may act as a bookkeeper that is configured to fulfill one or more of the following functions:
▪ allow an end user to subscribe to the data protection service to store, maintain and/or manage the user's private data;
▪ act as a trusted agent between an end user and service providers (e.g., e-commerce, etc.);
▪ support a network environment in which service providers no longer possess the user's private data; and/or
▪ provide for service providers and end users to exchange only a temporary identifier, e.g., a hashed number, rather than the user's actual personal information.

In some embodiments, a system arranged to implement one or more embodiments of the present disclosure may include at least three actors:
1. an end user node (e.g., user equipment associated with the user);
2. a data protection broker node (e.g., GDPR data broker); and
3. a service provider node.

Some embodiments of the present disclosure may include a system configured to host and protect end users' private data from external entities that offer services, such as banking, online shopping, delivery services, retail stores, etc. Some embodiments of the present disclosure may be used by e.g., GDPR authorities (e.g., law enforcement, official third-party broker, an authorized financial institution, etc.) to enforce data privacy rules and/or regulations and/or to ensure that regulations allowing end users to protect their private personal information (e.g., regulations providing users with a right to have private data deleted after use), will be enforced.

In some embodiments, new functionality may be executed by a newly proposed node, which may be called a data protection broker node. The data protection broker node may act as a bookkeeper, data broker and/or guardian between the end user(s) and the service provider(s). The data protection broker node may be configured to protect and/or delete the user's data and create a log of every event of a user transaction. In some embodiments, the data protection broker node may require that new protocols and interfaces be proposed and agreed within the industry.

Some embodiments of the present disclosure may provide for only one location (e.g., at data protection node) in which the user's private data may be stored, and such location (e.g., data protection node) may be trusted by end users and service providers. In some embodiments, users may set-up their profile to allow or not allow the data protection node, also called 'GDPR Broker' to save the users' personal information using for example a SMART contract. The data protection node may provide for one unique identifier (ID) to be associated to each user and service.

Private data (e.g., personal information) associated with a user and that may be protected according to the arrangements in the present disclosure may include one or more of the following, which may be considered a non-limiting list of examples:
▪ name;
▪ phone number;
▪ domain name;
▪ International Mobile Subscriber Identity (IMSI);
▪ Integrated Services Digital Network (ISDN);
▪ International Mobile Equipment Identity (IMEI);
▪ Mobile Subscriber Integrated Services Digital Network Number (MSISDN);
▪ Internet Protocol (IP) address;
▪ port number;
▪ contact name;
▪ Media Access Control (MAC) address information;
▪ emergency information;
▪ logs/file attachments including sensitive content;
▪ date of birth;
▪ driver's license number;
▪ taxpayer identification number;
▪ social security number;
▪ financial data (e.g., debit or credit card number, payment card security number, bank account number, etc.);
▪ customer authentication credentials;
▪ location-based information (LBI); and
▪ health information.

Before describing in detail example embodiments, it is noted that the embodiments reside primarily in combinations of apparatus components and processing steps related to a privacy enforcer, such as, for example, a data protection broker. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

In some embodiments, the non-limiting term user equipment (UE) is used to designate an electronic device enabling a user to make an electronic transaction. The UE herein can be any type of user device, such as, for example, a wireless device (WD) capable of communicating with a network node or another UE over radio signals. The UE herein can by any type of communication device capable of communicating with a data protection broker node, a service provider node, another UE, an application server, a network node, a server, etc., via a wired connection and/or a wireless connection. The UE may also be a radio communication device, target device, device to device (D2D) UE, machine type UE or UE capable of machine to machine communication (M2M), low-cost and/or low-complexity UE, a sensor equipped with UE, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

In some embodiments, the term "node" is used herein and can be any kind of network node, such as, a data protection broker node, a service provider node, such as, for example, an e-commerce service provider node, a delivery provider node, a financial institution node, etc.

A node may include physical components, such as processors, allocated processing elements, or other computing hardware, computer memory, communication interfaces, and other supporting computing hardware. The node may use dedicated physical components, or the node may be allocated use of the physical components of another device, such as a computing device or resources of a datacenter, in which case the node is said to be virtualized. A node may be associated with multiple physical components that may be located either in one location, or may be distributed across multiple locations.

In some embodiments, the terms "user", "end user", and "user equipment" and "UE" are used interchangeably since the user's interaction in the arrangements disclosed herein may be via a user equipment associated with the user (e.g., the user's smartphone or other computing device) and which may be configured to communicate with one or more of the other nodes in the system over one or more communication networks, according to the embodiments of the present disclosure.

In some embodiments, the general term "bootstrap operation" may be used to indicate starting, initiating and/or initializing a blockchain.

In some embodiments, the term "trusted temporary public identifier" may be used to indicate a public identifier (e.g., a hashed value) associated to the user, which may be used to temporarily identify the user for a user transaction and which may be trusted by service providers. The trusted temporary public identifier is not a private personal identifier for the user (e.g., not the user's first and last name or social security number).

In some embodiments, the term "new transaction" may be used to indicate an instance of purchasing a product/service, or a series of interactions initiated by a user to receive services (e.g., products/services) which are provided by one or more service providers.

Any two or more embodiments described in this disclosure may be combined in any way with each other.

Note also that some embodiments of the present disclosure may be described in terms of support for regulation rules such as General Data Protection Regulation (GDPR) rules and/or other privacy legislation. That is, some embodiments of the description can be described to support enforcement of the privacy rules/legislation above. In addition, all the terms disclosed in the present document may be described by the above documents. It should be understood that the techniques disclosed herein may be used to enforce privacy rules, legislation, standards and/or privacy terms between parties, even those not expressly listed above.

Note further, that functions described herein as being performed by a data protection broker node or another node described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

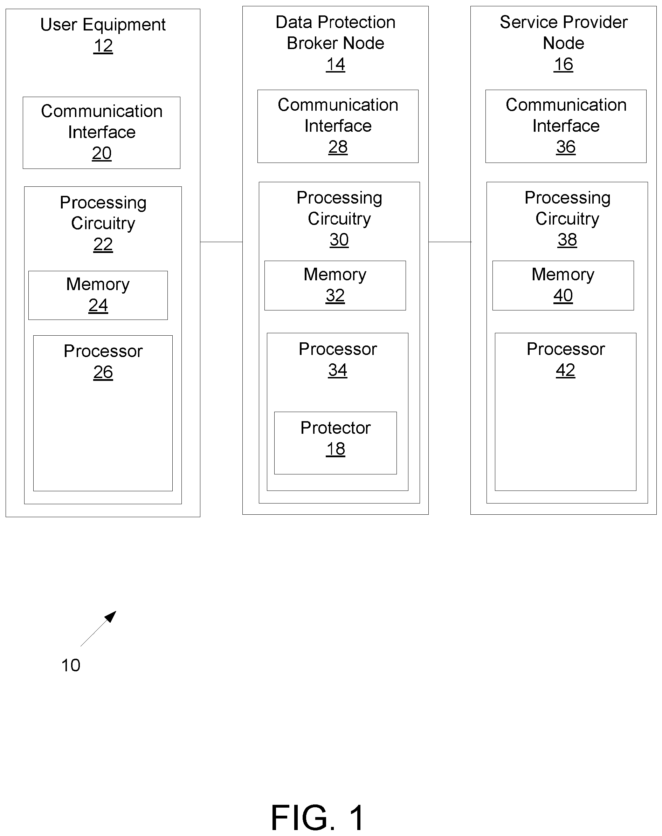

Referring again to the drawing figures, in which like elements are referred to by like reference numerals, there is shown in FIG. 1 a schematic diagram of the communication system 10, according to one embodiment, constructed in accordance with the principles of the present disclosure. The communication system 10 in FIG. 1 is a non-limiting example and other embodiments of the present disclosure may be implemented by one or more other systems and/or networks. Referring to FIG. 1, system 10 includes a user equipment 12, a data protection broker node 14 and a service provider node 16 in communication with one another over one or more wired and/or wireless network connections.

It should be understood that the system 10 may include numerous nodes of those shown in FIG. 1, as well as, additional nodes not shown in FIG. 1. In addition, the system 10 may include many more connections/interfaces than those shown in FIG. 1.

The system 10 may include a data protection broker node 14 having a protector 18 which may be configured to one or more of: perform a bootstrap operation between a user and the data protection broker node, to initialize a blockchain; as a result of the bootstrap operation, obtain a trusted temporary public identifier identifying the user; receive a request for a new transaction associated with the user and join the new transaction to the blockchain; and authorize the user to use the trusted temporary public identifier to perform a user transaction to protect a privacy of the user's data.

Example implementations, in accordance with some embodiments, of user equipment 12, data protection broker node 14 and service provider node 16, discussed herein will now be described.

The UE includes a communication interface 20, processing circuitry 22, and memory 24. The communication interface 20 may be configured to communicate with any of the nodes in the system 10 according to some embodiments of the present disclosure. In some embodiments, the communication interface 20 may be formed as or may include, for example, one or more radio frequency (RF) transmitters, one or more RF receivers, and/or one or more RF transceivers, and/or may be considered a radio interface. In some embodiments, the communication interface 20 may also include a wired interface.

The processing circuitry 22 may include one or more processors 26 and memory, such as, the memory 24. In particular, in addition to a traditional processor and memory, the processing circuitry 22 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 26 may be configured to access (e.g., write to and/or read from) the memory 24, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the UE 12 may further include software stored internally in, for example, memory 24, or stored in external memory (e.g., database) accessible by the UE 12 via an external connection. The software may be executable by the processing circuitry 22. The processing circuitry 22 may be configured to control any of the methods and/or processes described herein and/or to cause such methods, and/or processes to be performed, e.g., UE 12. The memory 24 is configured to store data, programmatic software code and/or other information described herein. In some embodiments, the software may include instructions stored in memory 24 that, when executed by the processor 26 causes the processing circuitry 22 and/or configures the UE 12 to perform the processes described herein with respect to the user and/or the UE.

The data protection broker node 14 includes a communication interface 28, processing circuitry 30, and memory 32. The communication interface 28 may be configured to communicate with the UE 12 and/or service provider node 16 and/or other nodes in the system 10 according to some embodiments of the present disclosure. In some embodiments, the communication interface 28 may be formed as or may include, for example, one or more radio frequency (RF) transmitters, one or more RF receivers, and/or one or more RF transceivers, and/or may be considered a radio interface. In some embodiments, the communication interface 28 may also include a wired interface.

The processing circuitry 30 may include one or more processors 34 and memory, such as, the memory 32. In particular, in addition to a traditional processor and memory, the processing circuitry 30 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 34 may be configured to access (e.g., write to and/or read from) the memory 32, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

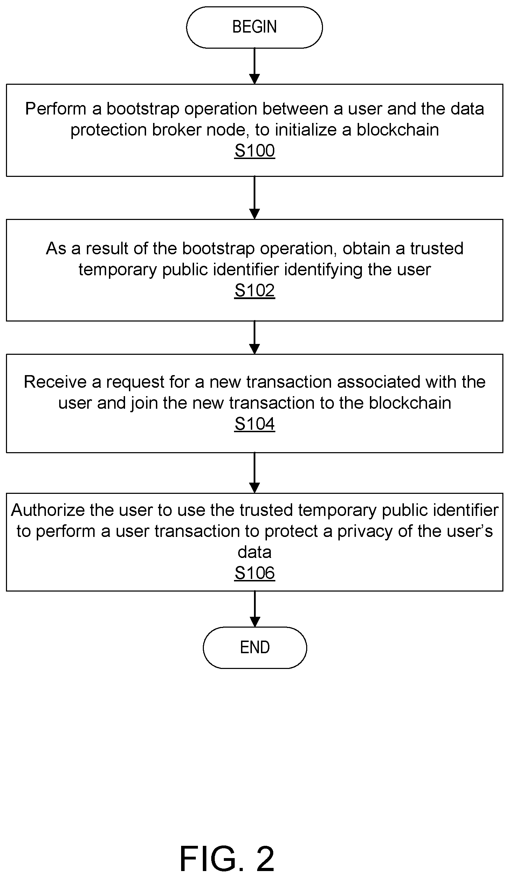

Thus, the data protection broker node 14 may further include software stored internally in, for example, memory 32, or stored in external memory (e.g., database) accessible by the data protection broker node 14 via an external connection. The software may be executable by the processing circuitry 30. The processing circuitry 30 may be configured to control any of the methods and/or processes described herein and/or to cause such methods, and/or processes to be performed, e.g., by the data protection broker node 14. The memory 32 is configured to store data, programmatic software code and/or other information described herein. In some embodiments, the software may include instructions stored in memory 32 that, when executed by the processor 34 and/or protector 18, causes the processing circuitry 30 and/or configures the data protection broker node 14 to perform the processes described herein with respect to the data protection broker node 14 (e.g., processes described with reference to FIG. 2 and/or the other figures).

The service provider node 16 includes a communication interface 36, processing circuitry 38, and memory 40. The communication interface 36 may be configured to communicate with any of the nodes in the system 10 according to some embodiments of the present disclosure. In some embodiments, the communication interface 36 may be formed as or may include, for example, one or more radio frequency (RF) transmitters, one or more RF receivers, and/or one or more RF transceivers, and/or may be considered a radio interface. In some embodiments, the communication interface 36 may also include a wired interface.

The processing circuitry 38 may include one or more processors 42 and memory, such as, the memory 40. In particular, in addition to a traditional processor and memory, the processing circuitry 38 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 42 may be configured to access (e.g., write to and/or read from) the memory 40, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the service provider node 16 may further include software stored internally in, for example, memory 40, or stored in external memory (e.g., database) accessible by the service provider node 16 via an external connection. The software may be executable by the processing circuitry 38. The processing circuitry 38 may be configured to control any of the methods and/or processes described herein and/or to cause such methods, and/or processes to be performed, e.g., by the service provider node 16. The memory 40 is configured to store data, programmatic software code and/or other information described herein. In some embodiments, the software may include instructions stored in memory 40 that, when executed by the processor 42, causes the processing circuitry 38 and/or configures the service provider node 16 to perform the processes described herein with respect to the service provider node 16.

In FIG. 1, the connection between the devices, UE 12, data protection broker node 14 and service provider node 16 is shown without explicit reference to any intermediary devices or connections. However, it should be understood that intermediary devices and/or connections may exist between these devices, although not explicitly shown.

Although FIG. 1 shows the protector 18, as being within the processor 34 of data protection broker node 14, it is contemplated that the protector 18 may be implemented such that a portion of the protector 18 is stored in a corresponding memory 32 within the processing circuitry 30. In other words, the protector 18 may be implemented in hardware or in a combination of hardware and software within the processing circuitry 30.

FIG. 2 is a flowchart of an example process in a data protection broker node (e.g., data protection broker node 14) according to some embodiments of the present disclosure. One or more Blocks and/or functions and/or methods performed by the data protection broker node 14 may be performed by one or more elements of data protection broker node 14 such as by protector 18 in processing circuitry 30, memory 32, processor 34, communication interface 28, etc. according to the example process/method. The example process includes performing (Block S 100), such as via protector 18, processing circuitry 30, memory 32, processor 34 and/or communication interface 28, a bootstrap operation between a user and the data protection broker node, to initialize a blockchain. The process includes, as a result of the bootstrap operation, obtaining (S 102), such as via protector 18, processing circuitry 30, memory 32, processor 34 and/or communication interface 28, a trusted temporary public identifier identifying the user. The process includes receiving (S 104), such as via protector 18, processing circuitry 30, memory 32, processor 34 and/or communication interface 28, from the user (e.g., via UE 12) a request for a new transaction associated with the user and joining the new transaction to the blockchain. The process includes authorizing (S 106), such as via protector 18, processing circuitry 30, memory 32, processor 34 and/or communication interface 28, the user to use the trusted temporary public identifier to perform a user transaction to protect a privacy of the user's data.

In some embodiments, the trusted temporary public identifier is a hashed value. In some embodiments, the method further includes sending, such as via protector 18, processing circuitry 30, memory 32, processor 34 and/or communication interface 28, the trusted temporary public identifier to the user (e.g., via UE 12) to anonymously register the user to at least one third-party service provider (e.g., service provider node 16). In some embodiments, the method further includes receiving, such as via protector 18, processing circuitry 30, memory 32, processor 34 and/or communication interface 28, an identifier from the at least one third-party service provider (e.g., service provider node 16); and when the received identifier matches the trusted temporary public identifier, recording at least one activity of the user transaction involving the user's data in the blockchain.

In some embodiments, the method further includes adding, such as via protector 18, processing circuitry 30, memory 32, processor 34 and/or communication interface 28, a smart contract to the blockchain, the smart contract being associated to the trusted temporary public identifier; using, such as via protector 18, processing circuitry 30, memory 32, processor 34 and/or communication interface 28, the trusted temporary public identifier to map the smart contract to the user's data; and executing, such as via protector 18, processing circuitry 30, memory 32, processor 34 and/or communication interface 28, the smart contract to control access, by at least one third-party service provider (e.g., service provider node 16), to at least part of the user's data during the user transaction and according to at least one term of the smart contract.

In some embodiments, the at least one term of the smart contract includes at least one self-executing term to handle delivery of a product ordered during the user transaction to the user's physical mailing address. In some embodiments, the at least one self-executing term includes: when a predetermined destination code is received from a third-party delivery service provider, providing the third-party delivery service provider with the user's physical mailing address, the destination code being different from the user's physical mailing address. In some embodiments, executing the smart contract further includes participating, such as via protector 18, processing circuitry 30, memory 32, processor 34 and/or communication interface 28, in the user transaction by communicating with at least one of at least one third-party service provider (e.g., service provider node 16) on behalf of the user according to the at least one term of the smart contract.

In some embodiments, the at least one term of the smart contract includes at least one of: at least one type of personal information; at least one third-party service provider; and at least one rule for electronic access to the at least one type of personal information by the at least one third-party service provider. In some embodiments, the at least one rule further includes restricting, such as via protector 18, processing circuitry 30, memory 32, processor 34 and/or communication interface 28, electronic access to at least one of the at least one type of personal information by one of the at least one third-party service provider (e.g., service provider node 16); and permitting, such as via protector 18, processing circuitry 30, memory 32, processor 34 and/or communication interface 28, electronic access to at least another of the at least one type of personal information by the one of the at least one third-party service provider (e.g., service provider node 16).

In some embodiments, the at least one term of the smart contract is set by the user (e.g., via UE 12) to control access to the user's data by the at least one third-party service provider (e.g., service provider node 16) participating in the user transaction. In some embodiments, the method further includes responsive to receiving a request from one of the at least one third-party service provider (e.g., service provider node 16) to verify a purchase amount for the user transaction, using the obtained trusted temporary public identifier to verify the purchase amount with a financial institution associated with the user.

In some embodiments, the method further includes receiving, such as via protector 18, processing circuitry 30, memory 32, processor 34 and/or communication interface 28, from one of the at least one third-party service provider (e.g., service provider node 16), a request to receive at least part of the user's data, the request indicating the trusted temporary public identifier that is associated to the user's data; mapping, such as via protector 18, processing circuitry 30, memory 32, processor 34 and/or communication interface 28, the indicated trusted temporary public identifier to the user; determining, such as via protector 18, processing circuitry 30, memory 32, processor 34 and/or communication interface 28, whether the user consents to providing the at least the requested part of the user's data to the one of the at least one third-party service provider; and based at least in part on the determination of the user consent, one of providing, such as via protector 18, processing circuitry 30, memory 32, processor 34 and/or communication interface 28, and not providing the at least the requested part of the user's data to the one of the at least one third-party service provider (e.g., service provider node 16).

In some embodiments, the user's data includes personal information of the user that is used during the user transaction. In some embodiments, the personal information includes at least one of a first name, a last name, a physical address, an email address, a telephone number, a social security number, bank account information, credit card information, a driver's license number and a health insurance number.

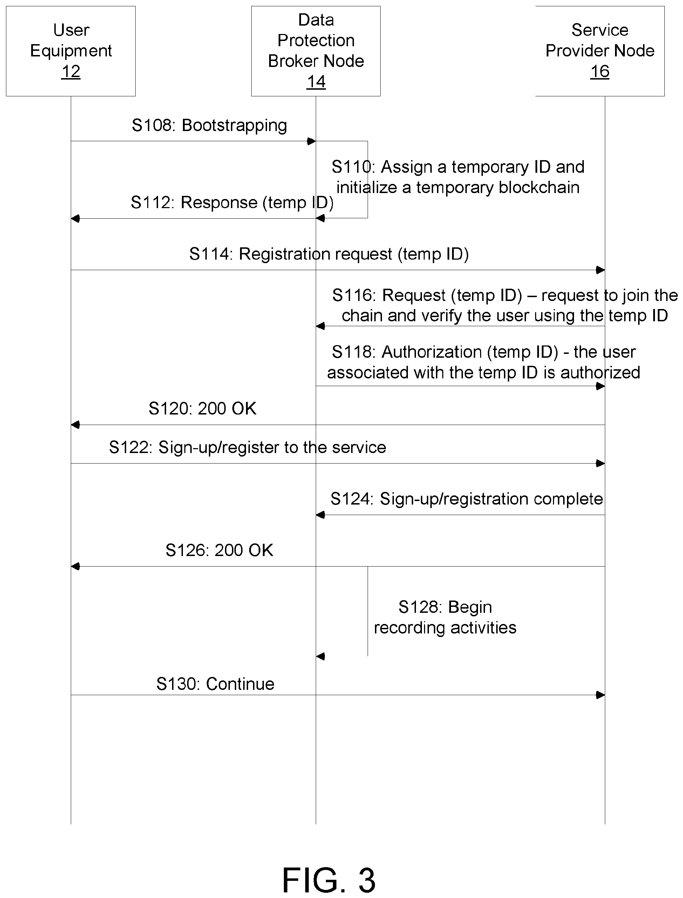

Having generally described arrangements for privacy enforcement, a more detailed description of some of the embodiments are provided as follows with reference to FIGS. 3-5, and which may be implemented by UE 12, data protection broker node 14 and/or service provider node 16.

Some embodiments of the present disclosure may provide data privacy enforcement according to the user's selection of which types of personal information to restrict access to and/or which service providers are permitted access to certain types of the personal information. The following table, Table 1, provides an example of a user's selection of which types of personal information to permit access to on a per service provider basis.

**Table 1. Personal information access permission on a per service provider basis (*depends on the service; ** depends on the requirements for delivery).**

| **Personal Data (User)** | **GDPR Broker** | **Service Provider** | **Bank** | **Delivery** |
|---|---|---|---|---|
| Name | YES | YES | YES | **YES |
| Address | YES | *YES | NO | YES |
| SSN | YES | NO | YES | NO |
| Email / Phone # | YES | YES | No | **YES |
| Bank Card # | YES | NO | YES | NO |
| Driver's License # | YES | *YES | NO | NO |
| Health Card # | YES | *YES | NO | NO |
| Health Information | YES | *YES | NO | NO |
| Temp ID | YES | YES | YES | YES |

As can be seen in Table 1, in the example, the user (e.g., via UE 12) indicates in e.g., the user's profile with the data protection broker node 14, that a particular service provider is permitted ('yes') to obtain access to the user's name, physical address, email address and telephone number, driver's license, health card number, health information and temporary ID; but, the user indicates (e.g., via UE 12) that the service provider may not ('no') obtain access to the user's social security number (SSN) and bank card number. For the delivery service provider, the user (e.g., via UE 12) has indicated that the delivery service provider is permitted ('yes') to obtain access to the user's name, physical address, email address and telephone number and temporary ID; but, the user indicates (e.g., via UE 12) that the delivery service provider may not ('no') obtain access to any of the user's bank card numbers, drivers license number, health card number and health information. The data protection broker node 14 (e.g., GDPR broker) is permitted access to all of the user's personal information, as indicated in Table 1. The financial institution/bank is permitted access only to the user's name, SSN and bank card number; but is not permitted to access any of the user's other personal information. In some embodiments, the user may indicate how the user desires to protect the user's data via e.g., a user registration/sign-up process, which is described in more detail below with reference to FIG. 3.

Some embodiments of the present disclosure may use blockchain and/or smart contract technology, which is briefly described below.

### Block Chain

Blockchain is based on a peer-to-peer (P2P) topology. Blockchains that utilize distributed ledger technology allow for contracts that are self-verifying, self-executing, and autonomous (i.e., smart contracts). Actors, such as UE 12, data protection broker node 14 and service provider nodes 16 (e.g., e-commerce, delivery service, financial institution) can automatically and securely exchange terms, events and/or other information throughout the lifecycle of a transaction without relying on e.g., real world brokers or middlemen.

Blockchain may provide for transactional transparency - the ability to create secure, real-time communication networks with partners, domestic and international, to support supply chains, payment networks, etc.

### Smart contracts

A smart contract (also known as a digital contract) may be considered a program (software code) that is stored on a blockchain. A smart contract may hold all the information required to automatically execute the transaction according to the contract terms. Because a smart contract is stored on a blockchain, smart contracts are considered immutable and distributed. Smart contracts encode contractual agreements. Stated another way, a smart contract may be enforced by the software code itself, i.e., self-executing with the terms/instructions of the agreement/operation directly written into the lines of software code (e.g., if electronic payment is received of x amount, an authorization to deliver a product is transmitted to a delivery service).

Having generally described examples of personal information that may be protected according to the arrangements in the present disclosure, as well as, a general description of the blockchain and smart contract technologies which may be used in some embodiments, some example use cases are described below with reference to the flow diagrams depicted in FIGS. 3-5.

FIG. 3 is a flowchart illustrating an example process for initiating a privacy protection procedure for an e-commerce use case according to one embodiment. In some embodiments, FIG. 3 may represent an example of a user registering with a service provider to utilize the privacy protection service according to the techniques disclosed herein. The data protection broker node 14 may be configured to set-up a temporary blockchain including one or more of the entities participating in the e-commerce transaction (e.g., Amazon, bank, post office and user) and manage the life cycle of the transaction. For example, in step S108, the UE 12 initiates bootstrapping. In step S110, the data protection broker node 14 performs a bootstrap operation to initialize a temporary blockchain for the user's transaction and also assigns a temporary identifier (ID) (e.g., a hash value) to the user's transaction. The temporary ID may be considered a trusted temporary public identifier identifying the user. In step S112, the data protection broker node 14 sends a response message to the UE 12. In some embodiments, the response message may include the temporary ID and/or a confirmation that the temporary blockchain has been successfully initialized. In step S114, after the UE 12 obtains the temporary ID, the UE 12 may initialize or initiate a registration request to a service provider node 16 (e.g., via e-commerce website). For example, the UE 12 may indicate to the service provider node 16 a request to conduct an e-commerce transaction that is privacy protected by the data protection broker node 14 (as opposed to e.g., a conventional e-commerce transaction without the data protection broker node 14). As a result of the UE's 12 request, in step S116, the service provider node 16 may request to join the blockchain (that was initialized in step S110) and may further verify the user with the data protection broker node 14. For example, the user's registration request to the service provider node 16 in step S114 may include an indication of the trusted, temporary public ID, which ID may be forwarded to the data protection broker node 14 by the service provider node 16 to verify the user and identify the temporary blockchain initialized for the user.

In step S118, the data protection broker node 14 inquires that the user is an authorized user of the data protection broker node 14. The data protection broker node 14 may join the new transaction to the blockchain. In step S120, the service provider node 16 confirms that the transaction request is approved by e.g., a 200 OK message. In some embodiments, the signaling between the nodes (UE 12, data protection broker node 14, one or more service provider nodes 16) is via session initiation protocol (SIP) messaging. In this example, SIP messaging is used; however, it is contemplated that the messaging between nodes may be via other communication protocols in other embodiments.

After the temporary blockchain has been initialized by the data protection broker node 14 and the new transaction joined to the blockchain, the user may conduct e-commerce activities with the service provider node 16. For example, in step S122, the UE 12 may sign-up/register to the service provider node 16, e.g., the user may sign-in to or register an account at the e-commerce website. In step S124, the service provider node 16 may confirm to the data protection broker node 14 that the user is signed-in/registered to his/her account. In step S126, the service provider node 16 may send a 200 OK message to the UE 12 to confirm to the user that the user has signed-in and/or registered to the user's account. In step S128, the data protection broker node 14 begins recording activities occurring during the user's transaction (e.g., use of the user's personal information, purchasing and browsing activities, delivery information, financial information, etc.). The user's activities may be recorded in the blockchain as part of the new transaction. In step S130, the user may continue with the e-commerce transaction, while the data protection broker node 14 records the user's activities.

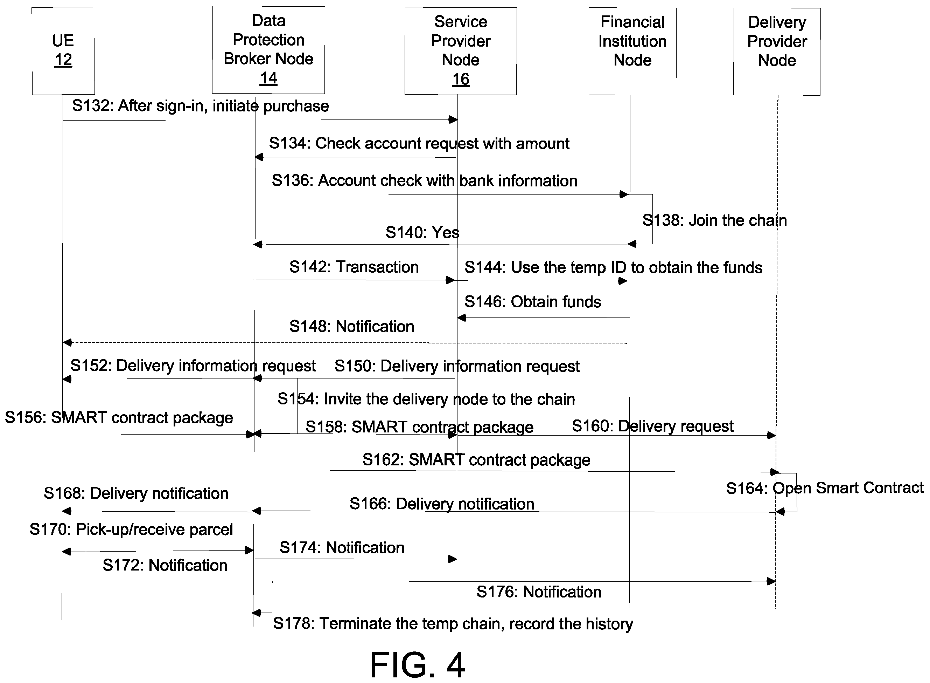

FIG. 4 is a flowchart illustrating yet another example process for conducting a purchase transaction that is privacy protected and enforced according to one embodiment of the present disclosure. In step S132, after the user (via UE 12) has signed-in to his/her account with the service provider node 16 (e.g., using the procedure described in FIG. 3), the user may initiate a purchase of a product e.g., via an e-commerce website provided by the service provider node 16. In step S134, the service provider node 16 sends a request to the data protection broker node 14 to check/verify the user's financial account for sufficient funds to cover the amount of the purchase. In step S136, the data protection broker node 14 sends a request to the financial institution node to check/verify the user's financial account for the amount. The request may include the user's financial information (e.g., bank account number and pin), which only the data protection broker node 14 has access to (not the service provider node 16). The request may also include the temporary ID associated to the user. In step S138, the financial institution node joins the blockchain and, in step S140, indicates to the data protection broker node 14 that the user's financial account does indeed have sufficient funds to cover the purchase amount ('yes'). In step S142, the data protection broker node 14 authorizes the transaction to the service provider node 16 and, in step S144, the service provider node 16 uses the temporary ID to obtain the funds for the purchase. In step S146, the financial institution node transfers the funds to the service provider node 16. In step S148, the financial institution node may also optionally, notify the UE 12 that the funds were transferred to the service provider.

In step S150, as a result of obtaining the funds for the purchase, the service provider node 16 may send a delivery information request to the data protection broker node 14. The delivery information request may also include an indication of the delivery partner (e.g., FedEx) so that the delivery partner can be incorporated into the smart contract, as discussed in more detail below. In step S152, the data protection broker node 14 may forward the delivery information request to the UE 12, as well as, the indication of the delivery partner. In step S154, the service provider node 16 may invite the delivery service provider to the blockchain ("chain"). In step S156, the UE 12 may provide and/or initiate a smart contract, which may include the delivery partner as a party to the smart contract. The data protection broker node 14 forwards the smart contract to the service provider node 16 in step S158. In step S160, the service provider node 16 may request product delivery to the delivery provider node per the terms of the smart contract. In step S162, the data protection broker node 14 may send the smart contract to the delivery provider node as well. In step S164, the delivery service provider node may open the smart contract and follow the instructions/terms of the smart contract, such as where to deliver the product.

The smart contract may include an indication as to a location to deliver the product packages to, as well as, the user's name, bar code, expiration date of the contract, etc. In some embodiments, the smart contract may include one or more of the following contract fields:
- trusted temporary ID associated to the user;
- the service(s) involved in the transaction;
- an indication of whether the service(s) are allowed to keep the information or not (e.g., whether or not the service is required to delete the user's information per regulation);
- amount of money allowed and verified by the financial institution;
- date of purchase;
- user profiles allowed; and/or
- mailing address to use (e.g., home, trusted post office, depends on user's preference).

The user may issue the smart contract (e.g., as in step S156), which may be joined to the blockchain (e.g., by data protection broker node 14).

In some embodiments, the smart contract may facilitate delivery of the purchased good(s) according to a temporary address ID or local post office address if the user supplies the information to the delivery provider. For example, if the user supplies a trusted post office address (e.g., local post office) e.g., via the smart contract, a temporary address ID may be generated (e.g., by data protection broker node 14) for the goods for this user transaction. The temporary address ID may be forwarded to the local post office. The user may then use the temporary address ID associated to the purchase in order to pick up the good(s) at the local post office. For example, in step S168, after the delivery vendor delivers the product to the local post office the delivery provider node may send a delivery notification to the data protection broker node 14, in step S166. In step S168, the delivery notification may then be forwarded to the user's UE 12. When the user physically obtains the goods, in step S170, the user may verify that the goods have been obtained (e.g., in step S172, UE 12 transmits a notification that the user picked up the goods at the pick-up location). The data protection broker node 14 may forward the notification to the service provider node 16 in step S174 and to the delivery provider node in step S176. In step S178, since the transaction is complete (e.g., payment submitted and verification of delivery), a subset or all of the temporary IDs (e.g., trusted temporary ID generated in step S110 and temporary address ID generated for the post office delivery, etc.) may be deleted and the blockchain associated to the transaction may be terminated and/or discarded.

Steps 132-178 may be repeated for consecutive transactions involving the same service provider node 16 when the user initiates additional transactions.

In an alternate embodiment, the user's trusted temporary ID generated in step S110 may be stored and/or maintained by the data protection broker node 14 in order to continue to permit the user to purchase products from the service provider node 16 using the temporary ID. In some embodiments, the data protection broker node 14 may maintain the records for this user's behavior or preference of shopping. The data protection broker node 14 may store the IDs for the user and for future use of the services.

In some embodiments, the smart contract may include a destination code (e.g., barcode). The destination code may be used to maintain the privacy of the user's geographic location from the service provider node 16, while also permitting the delivery service provider to deliver the product(s) directly to the user's physical address. In one embodiment, the destination code may be provided to the service provider node 16 (e.g., via the smart contract) and the service provider node 16 may provide the destination code to its delivery vendor. The delivery provider node associated to the vendor may then send the destination code to the data protection broker node 14. Per the terms of the smart contract, as a result of receiving the destination code from the vendor (e.g., as authorization/verification), the data protection broker node 14 may then send the user's actual physical mailing address to the delivery provider node so that the delivery driver can deliver the products to the user's home address. In the above examples, it can be seen that the smart contract may provide self-executing terms to handle e.g., delivery of a product to a user specified location, e.g., local post office or home address.

In some embodiments, because the data protection broker node 14 may have access to the user's personal information and/or may be configured to enforce privacy regulation at the user's request toward service providers (e.g., e-commerce, etc.), the data protection broker node 14 may be supervised and/or provided by a government entity, or an otherwise trusted third-party group. The data protection broker node 14 may maintain the end user's personal information. The following is a non-exhaustive list of functionality that may be provided by the data protection broker node 14:
- store the end user's information, and communicate with financial institutions to verify funds for purchase transactions;
- store the services information and communicate with service providers to guarantee the transaction;
- coordinate with deliver service providers to guarantee the delivery to the user;
- administrate the registration for end users, financial institutions and services;
- manage the temporary blockchain;
- manage the temporary ID associated to the user and/or the user transaction;
- maintain the records of the user transaction;
- anonymizing the personal information according to the user's preference; and/or
- generate reports to assist service providers for statistical purposes.

In some embodiments of the present disclosure, service providers may be permitted to perform statistical analysis and track the behaviors of users with assistance from the data protection broker node 14, and without compromising the user's preference for maintaining a privacy of the user's personal information. For example, the data protection broker node 14 may provide one or more of the following:
- generate the reports for this service;
- track the user's behavior, and share such tracking information with service providers, without leaking the user's personal information (unless authorized by the user); and/or
- set-up the permissions in the user's profile (for example, the data protection broker node 14 is only permitted to obtain and/or analyze the user's history data without including any personal information, i.e., anonymize the data).

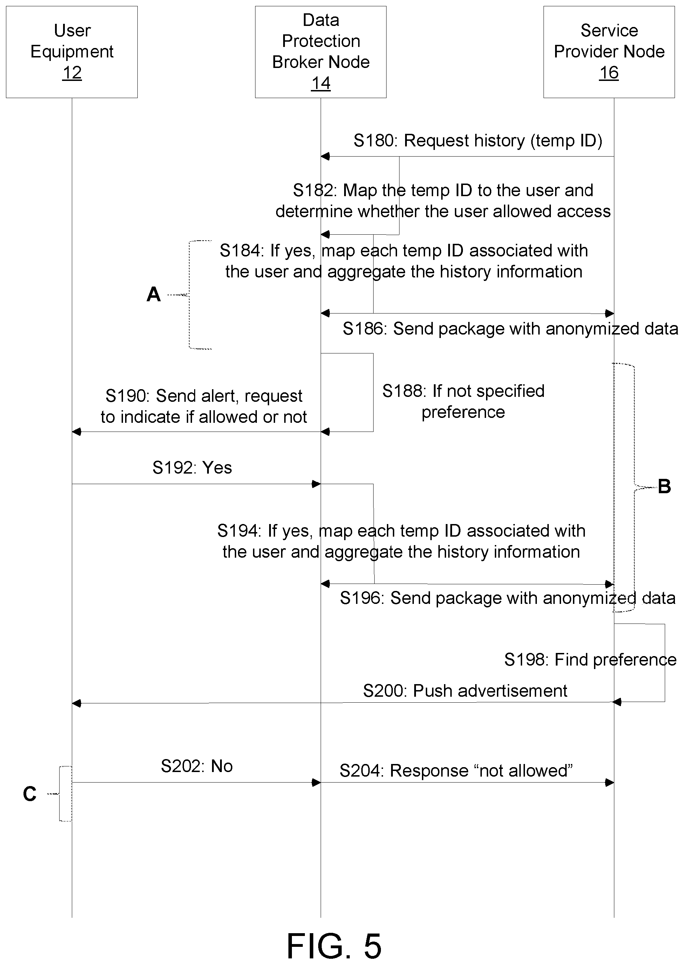

FIG. 5 is a flowchart illustrating an example of providing statistical information to a service provider according to one embodiment of the present disclosure. In step S180, the service provider node 16 may request a history of a user's behavior. The request may include an identifier (ID), such as the temporary identifier (temp ID) identifying the user (e.g., temporary ID) in the ongoing user session. In step S182, the data protection broker node 14 may map the received ID to the user and determine whether the user has allowed access to the user's information. Depending on the user's preference, the process may proceed according to one of options A, B or C. In option A, the user has indicated permission to allow access to the user's information; thus, in step S184, the data protection broker node 14 may map each temp ID associated to the user and aggregate the history information. If the process proceeds to either of options A or B (the user has permitted history information to be released), the process may include mapping each temporary ID associated with the user. Such mapping may be performed by the data protection broker node 14 because each temp ID may be different every/each time the user logs into the service provider node 16 and/or data protection broker node 14 (e.g., each user session). The data protection broker node 14 maps the temp ID to the user profile every time there is a transaction. The data protection broker node 14 may map the current temp ID (e.g., the temp ID received in step S180 for the ongoing user session) to all previous temp IDs of the user (e.g., which may be stored by the data protection broker node 14) and extracts all transaction history that is associated to all such temp IDs of the user. In step S186, the data protection broker node 14 may then package the extracted transaction histories for transmission to the requesting service provider node 16. The data protection broker node 14 may package the user's information as anonymized data (e.g., remove personal information, providing only the user's history/behavior unassociated to any information that may personally identify the user) and then, in step S186, send the package to the service provider node 16.

In option B, in step S188, the data protection broker node 14 determines that the user has not specified a preference. In step S190, the data protection broker node 14 sends an alert to the user's UE 12 to request that the user indicate if the user prefers to allow the service provider to obtain anonymized data of the user's behavior, or not. In step S192, the user answers with 'yes' and, in step S194, as a result of the yes indication, the data protection broker node 14 maps each temp ID associated to the user and aggregates the user's history information, as described above with respect to step S184 for option A and which will not be repeated here for brevity. As with option A, for option B the data protection broker node 14 packages the user's information as anonymized data (e.g., remove personal information, providing only the user's history/behavior unassociated to any information that may personally identify the user) and, in step S196, sends the package to the service provider node 16.

After the data protection broker node 14 sends the package with the anonymized data to the service provider node 16 (step S186 for option A, or step S196 for option B), the process may proceed to step S198, where the service provider node 16 may, e.g., based on an analysis of the user's history information, determine a preference for a particular advertisement to be pushed to the user. In step S200, the service provider node 16 may push the determined advertisement to the user's UE 12.

In option C, instead of indicating yes as with options B and C discussed above, in step S202, the user indicates no (i.e., permission is not granted). As a result of the no indication, the data protection broker node 14 sends a response to the service provider node 16 indicating that the request is not allowed in step S204. The process may terminate here.

As described in this disclosure, the data protection broker node 14 may be provided to initialize a temporary blockchain for a user's transaction and join the transaction to the blockchain. The data protection broker node 14 may also use a temporary ID to identify the user (to protect the user's personal identification) and/or the data protection broker node 14 may use a smart contract to process the transaction actions and/or enforce the user's privacy preferences. Even in the smart contract, there may not be any personal information stored. In some embodiments, the blockchain may be configured to have a life cycle that is as long as the user's transaction (e.g., from the user's initiation to a confirmed pick-up of the product). The data protection broker node 14 may be considered to be a trusted partner and may grant authentication and authorization to peer nodes in the blockchain. In some embodiments, the data protection broker node 14 may also provide anonymized data to service providers to permit statistical analysis of the user's behavior, without providing the user's personal information.

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.
It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method implemented in a data protection broker node (14), the method comprising:
a. performing (S100) a bootstrap operation between a user and the data protection broker node (14), to initialize a blockchain;
b. as a result of the bootstrap operation, obtaining (S102) a trusted temporary public identifier identifying the user;
c. receiving (S104) a request for a new transaction associated with the user and joining the new transaction to the blockchain; and
d. authorizing (S106) the user to use the trusted temporary public identifier to perform a user transaction to protect a privacy of the user's data,
wherein the method further comprises:
adding a smart contract to the blockchain, the smart contract being associated to the trusted temporary public identifier;
using the trusted temporary public identifier to map the smart contract to the user's data; and
executing the smart contract to control access, by at least one third-party service provider, to at least part of the user's data during the user transaction and according to at least one term of the smart contract, wherein executing the smart contract comprises participating in the user transaction by communicating with the at least one third-party service provider on behalf of the user according to the at least one term of the smart contract.

2. The method of Claim 1, wherein the trusted temporary public identifier is a hashed value.

3. The method of any one of Claims 1 and 2, further comprising:
sending the trusted temporary public identifier to the user to anonymously register the user to at least one third-party service provider.

4. The method of any one of Claims 1-3, further comprising:
receiving an identifier from the at least one third-party service provider; and
when the received identifier matches the trusted temporary public identifier, recording at least one activity of the user transaction involving the user's data in the blockchain.

5. The method of any one of Claims 1-4, wherein the at least one term of the smart contract includes at least one self-executing term to handle delivery of a product ordered during the user transaction to the user's physical mailing address.

6. The method of Claim 5, wherein the at least one self-executing term includes:
when a predetermined destination code is received from a third-party delivery service provider, providing the third-party delivery service provider with the user's physical mailing address, the destination code being different from the user's physical mailing address.

7. The method of any one of Claims 1-6, wherein the at least one term of the smart contract includes at least one of:
at least one type of personal information;
at least one third-party service provider; and
at least one rule for electronic access to the at least one type of personal information by the at least one third-party service provider.

8. The method of Claim 7, wherein the at least one rule further comprises:
restricting electronic access to at least one of the at least one type of personal information by one of the at least one third-party service provider; and
permitting electronic access to at least another of the at least one type of personal information by the one of the at least one third-party service provider.

9. The method of any one of Claims 1-8, wherein the at least one term of the smart contract is set by the user to control access to the user's data by the at least one third-party service provider participating in the user transaction.

10. The method of any one of Claims 1-4, further comprising:
responsive to receiving a request from one of the at least one third-party service provider to verify a purchase amount for the user transaction, using the obtained trusted temporary public identifier to verify the purchase amount with a financial institution associated with the user.

11. The method of any one of Claims 1-4, further comprising:
receiving, from one of the at least one third-party service provider, a request to receive at least part of the user's data, the request indicating the trusted temporary public identifier that is associated to the user's data;
mapping the indicated trusted temporary public identifier to the user;
determining whether the user consents to providing the at least the requested part of the user's data to the one of the at least one third-party service provider; and
based at least in part on the determination of the user consent, one of providing and not providing the at least the requested part of the user's data to the one of the at least one third-party service provider.

12. The method of any one of Claims 1-11, wherein the user's data includes personal information of the user that is used during the user transaction.

13. The method of Claim 12, wherein the personal information includes at least one of a first name, a last name, a physical address, an email address, a telephone number, a social security number, bank account information, credit card information, a driver's license number and a health insurance number.

14. A data protection broker node (14) comprising processing circuitry (30), the processing circuitry (30) configured to cause the data protection broker node (14) to:
a. perform a bootstrap operation between a user and the data protection broker node (14), to initialize a blockchain;
b. as a result of the bootstrap operation, obtain a trusted temporary public identifier identifying the user;
c. receive a request for a new transaction associated with the user and join the new transaction to the blockchain; and
d. authorize the user to use the trusted temporary public identifier to perform a user transaction to protect a privacy of the user's data,
wherein the processing circuitry (30) is further configured to cause the data protection broker node (14) to:
add a smart contract to the blockchain, the smart contract being associated to the trusted temporary public identifier;
use the trusted temporary public identifier to map the smart contract to the user's data; and
execute the smart contract to control access, by at least one third-party service provider, to at least part of the user's data during the user transaction and according to at least one term of the smart contract, wherein the processing circuitry (30) is configured to execute the smart contract by being configured to participate in the user transaction by communicating with the at least one third-party service provider on behalf of the user according to the at least one term of the smart contract.

## Patentansprüche

1. Verfahren, das in einem Datenschutz-Vermittlungsknoten (14) umgesetzt wird, wobei das Verfahren Folgendes umfasst:
a. Durchführen (S100) eines Bootstrap-Vorgangs zwischen einem Benutzer und dem Datenschutz-Vermittlungsknoten (14), um eine Blockchain zu initialisieren;
b. infolge des Bootstrap-Vorgangs Erlangen (S102) einer vertrauenswürdigen temporären öffentlichen Kennung, die den Benutzer identifiziert;
c. Empfangen (S104) einer Anforderung einer neuen Transaktion, die dem Benutzer zugeordnet ist, und Anfügen der neuen Transaktion an die Blockchain; und
d. Autorisieren (S106) des Benutzers, die vertrauenswürdige temporäre öffentliche Kennung zu verwenden, um eine Benutzertransaktion durchzuführen, um eine Datensicherheit der Daten des Benutzers zu schützen,
wobei das Verfahren ferner Folgendes umfasst:
Hinzufügen eines Smart Contracts zu der Blockchain, wobei der Smart Contract der vertrauenswürdigen temporären öffentlichen Kennung zugeordnet ist;
Verwenden der vertrauenswürdigen temporären öffentlichen Kennung, um den Smart Contract auf die Daten des Benutzers abzubilden; und
Ausführen des Smart Contracts, um einen Zugriff durch mindestens einen Dritt-Dienstanbieter auf zumindest einen Teil der Daten des Benutzers während der Benutzertransaktion und gemäß mindestens einer Bedingung des Smart Contracts zu kontrollieren, wobei das Ausführen des Smart Contracts Teilnehmen an der Benutzertransaktion durch Kommunizieren mit dem mindestens einen Dritt-Dienstanbieter im Namen des Benutzers gemäß der mindestens einen Bedingung des Smart Contracts umfasst.

2. Verfahren nach Anspruch 1, wobei die vertrauenswürdige temporäre öffentliche Kennung ein gehashter Wert ist.

3. Verfahren nach einem der Ansprüche 1 und 2, ferner umfassend:
Senden der vertrauenswürdigen temporären öffentlichen Kennung an den Benutzer, um den Benutzer anonym bei dem mindestens einen Dritt-Dienstanbieter zu registrieren.

4. Verfahren nach einem der Ansprüche 1-3, ferner umfassend:
Empfangen einer Kennung von dem mindestens einen Dritt-Dienstanbieter; und
wenn die empfangene Kennung mit der vertrauenswürdigen temporären öffentlichen Kennung übereinstimmt, Aufzeichnen mindestens einer Aktivität der Benutzertransaktion, welche die Daten des Benutzers beinhaltet, in der Blockchain.

5. Verfahren nach einem der Ansprüche 1-4, wobei die mindestens eine Bedingung des Smart Contracts mindestens eine selbstausführende Bedingung beinhaltet, um eine Lieferung eines Produkts, das während der Benutzertransaktion bestellt wird, an die physische Postanschrift des Benutzers zu handhaben.

6. Verfahren nach Anspruch 5, wobei die mindestens eine selbstausführende Bedingung Folgendes beinhaltet:
wenn ein vorbestimmter Zielcode von einem Dritt-Lieferdienstanbieter empfangen wird, Bereitstellen der physischen Postanschrift des Benutzers an den Dritt-Lieferdienstanbieter, wobei sich der Zielcode von der physischen Postanschrift des Benutzers unterscheidet.

7. Verfahren nach einem der Ansprüche 1-6, wobei die mindestens eine Bedingung des Smart Contracts mindestens eines der Folgenden beinhaltet:
mindestens eine Art von personenbezogenen Informationen;
mindestens einen Dritt-Dienstanbieter; und
mindestens eine Regel zum elektronischen Zugriff auf die mindestens eine Art von personenbezogenen Informationen durch den mindestens einen Dritt-Dienstanbieter.

8. Verfahren nach Anspruch 7, wobei die mindestens eine Regel ferner Folgendes umfasst:
Einschränken eines elektronischen Zugriffs auf mindestens eine der mindestens einen Art von personenbezogenen Informationen durch einen von dem mindestens einen Dritt-Dienstanbieter; und
Zulassen eines elektronischen Zugangs auf mindestens eine andere der mindestens einen Art von personenbezogenen Informationen durch den einen von dem mindestens einen Dritt-Dienstanbieter.

9. Verfahren nach einem der Ansprüche 1-8, wobei die mindestens eine Bedingung des Smart Contracts durch den Benutzer eingestellt wird, um den Zugriff auf die Daten des Benutzers durch den mindestens einen Dritt-Dienstanbieter, der an der Benutzertransaktion teilnimmt, zu kontrollieren.

10. Verfahren nach einem der Ansprüche 1-4, ferner umfassend:
als Reaktion darauf, dass eine Anforderung von einem von dem mindestens einen Dritt-Dienstanbieter empfangen wird, einen Kaufbetrag für die Benutzertransaktion zu überprüfen, Verwenden der erhaltenen vertrauenswürdigen temporären öffentlichen Kennung, um den Kaufbetrag bei einem dem Benutzer zugeordneten Finanzinstitut zu überprüfen.

11. Verfahren nach einem der Ansprüche 1-4, ferner umfassend:
Empfangen, von einem von dem mindestens einen Dritt-Dienstanbieter, einer Anforderung, die zumindest einen Teil der Daten des Benutzers zu empfangen, wobei die Anforderung die vertrauenswürdige temporäre öffentliche Kennung angibt, die den Daten des Benutzers zugeordnet ist;
Abbilden der vertrauenswürdigen temporären öffentlichen Kennung auf den Benutzer;
Bestimmen, ob der Benutzer zustimmt, zumindest den angeforderten Teil der Daten des Benutzers an den einen von dem mindestens einen Dritt-Dienstanbieter bereitzustellen; und
zumindest teilweise auf Grundlage der Bestimmung der Benutzerzustimmung eines von Bereitstellen und Nicht-Bereitstellen zumindest des angeforderten Teils der Daten des Benutzers an den einen von dem mindestens einen Dritt-Dienstanbieter.

12. Verfahren nach einem der Ansprüche 1-11, wobei die Daten des Benutzers personenbezogene Informationen des Benutzers beinhalten, die während der Benutzertransaktion verwendet werden.

13. Verfahren nach Anspruch 12, wobei die personenbezogenen Informationen mindestens eines von einem Vornamen, einem Nachnamen, einer physischen Anschrift, einer E-Mail-Adresse, einer Telefonnummer, einer Sozialversicherungsnummer, Bankkontoinformationen, Kreditkarteninformationen, einer Führerscheinnummer und einer Krankenversicherungsnummer beinhalten.

14. Datenschutz-Vermittlungsknoten (14), umfassend eine Verarbeitungsschaltung (30), wobei die Verarbeitungsschaltung (30) dazu ausgelegt ist, den Datenschutz-Vermittlungsknoten (14) zu Folgendem zu veranlassen:
a. Durchführen eines Bootstrap-Vorgangs zwischen einem Benutzer und dem Datenschutz-Vermittlungsknoten (14), um eine Blockchain zu initialisieren;
b. infolge des Bootstrap-Vorgangs Erlangen einer vertrauenswürdigen temporären öffentlichen Kennung, die den Benutzer identifiziert;
c. Empfangen einer Anforderung einer neuen Transaktion, die dem Benutzer zugeordnet ist, und Anfügen der neuen Transaktion an die Blockchain; und
d. Autorisieren des Benutzers, die vertrauenswürdige temporäre öffentliche Kennung zu verwenden, um eine Benutzertransaktion durchzuführen, um eine Datensicherheit der Daten des Benutzers zu schützen, wobei die Verarbeitungsschaltung (30) ferner dazu ausgelegt ist, den Datenschutz-Vermittlungsknoten (14) zu Folgendem zu veranlassen:
Hinzufügen eines Smart Contracts zu der Blockchain, wobei der Smart Contract der vertrauenswürdigen temporären öffentlichen Kennung zugeordnet ist;
Verwenden der vertrauenswürdigen temporären öffentlichen Kennung, um den Smart Contract auf die Daten des Benutzers abzubilden; und
Ausführen des Smart Contracts, um einen Zugriff durch mindestens einen Dritt-Dienstanbieter auf zumindest einen Teil der Daten des Benutzers während der Benutzertransaktion und gemäß mindestens einer Bedingung des Smart Contracts zu kontrollieren, wobei die Verarbeitungsschaltung (30) dazu ausgelegt ist, den Smart Contract auszuführen, indem sie dazu ausgelegt ist, an der Benutzertransaktion durch Kommunizieren mit dem mindestens einen Dritt-Dienstanbieter im Namen des Benutzers gemäß der mindestens einen Bedingung des Smart Contracts teilzunehmen.

## Revendications

1. Procédé mis en œuvre dans un nœud de courtier de protection de données (14), le procédé comprenant :
a. la réalisation (S100) d'une opération d'amorçage entre un utilisateur et le nœud de courtier de protection de données (14), pour initialiser une blockchain ;
b. à la suite de l'opération d'amorçage, l'obtention (S102) d'un identifiant public temporaire de confiance identifiant l'utilisateur ;
c. la réception (S104) d'une demande de nouvelle transaction associée à l'utilisateur et la jonction de la nouvelle transaction à la blockchain ; et
d. l'autorisation (S106) de l'utilisateur à utiliser l'identifiant public temporaire de confiance pour effectuer une transaction utilisateur afin de protéger la confidentialité des données de l'utilisateur, le procédé comprenant en outre :
l'ajout d'un contrat intelligent à la blockchain, le contrat intelligent étant associé à l'identifiant public temporaire de confiance ;
l'utilisation de l'identifiant public temporaire de confiance pour mapper le contrat intelligent aux données de l'utilisateur ; et
l'exécution du contrat intelligent pour contrôler l'accès, par au moins un fournisseur de services tiers, à au moins une partie des données de l'utilisateur pendant la transaction utilisateur et selon au moins un terme du contrat intelligent, l'exécution du contrat intelligent comprenant la participation à la transaction utilisateur en communiquant avec l'au moins un fournisseur de services tiers au nom de l'utilisateur selon l'au moins un terme du contrat intelligent.

2. Procédé selon la revendication 1, dans lequel l'identifiant public temporaire de confiance est une valeur hachée.

3. Procédé selon l'une quelconque des revendications 1 et 2, comprenant en outre :
l'envoi de l'identifiant public temporaire de confiance à l'utilisateur pour enregistrer anonymement l'utilisateur auprès d'au moins un fournisseur de services tiers.

4. Procédé selon l'une quelconque des revendications 1 à 3, comprenant en outre :
la réception d'un identifiant d'au moins un fournisseur de services tiers ; et
lorsque l'identifiant reçu correspond à l'identifiant public temporaire de confiance, l'enregistrement d'au moins une activité de la transaction utilisateur impliquant les données de l'utilisateur dans la blockchain.

5. Procédé selon l'une quelconque des revendications 1 à 4, dans lequel l'au moins un terme du contrat intelligent comprend au moins un terme auto-exécutable pour gérer la livraison d'un produit commandé pendant la transaction utilisateur à l'adresse postale physique de l'utilisateur.

6. Procédé selon la revendication 5, dans lequel l'au moins un terme auto-exécutable comprend :
lorsqu'un code de destination prédéterminé est reçu d'un fournisseur de services de livraison tiers, la fourniture au fournisseur de services de livraison tiers l'adresse postale physique de l'utilisateur, le code de destination étant différent de l'adresse postale physique de l'utilisateur.

7. Procédé selon l'une quelconque des revendications 1 à 6, dans lequel au moins un terme du contrat intelligent comprend au moins l'un parmi :
au moins un type d'informations personnelles ;
au moins un fournisseur de services tiers ; et
au moins une règle pour l'accès électronique à l'au moins un type d'informations personnelles par l'au moins un fournisseur de services tiers.

8. Procédé selon la revendication 7, dans lequel l'au moins une règle comprend en outre :
la restriction de l'accès électronique à au moins un de l'au moins un type d'informations personnelles par l'un de l'au moins un fournisseur de services tiers ; et
la permission de l'accès électronique à au moins un autre de l'au moins un type d'informations personnelles par l'un de l'au moins un fournisseur de services tiers.

9. Procédé selon l'une quelconque des revendications 1 à 8, dans lequel l'au moins un terme du contrat intelligent est défini par l'utilisateur pour contrôler l'accès aux données de l'utilisateur par l'au moins un fournisseur de services tiers participant à la transaction utilisateur.

10. Procédé selon l'une quelconque des revendications 1 à 4, comprenant en outre :
en réponse à la réception d'une demande d'un de l'au moins un fournisseur de services tiers pour vérifier un montant d'achat pour la transaction utilisateur, l'utilisation de l'identifiant public temporaire de confiance obtenu pour vérifier le montant de l'achat auprès d'une institution financière associée à l'utilisateur.

11. Procédé selon l'une quelconque des revendications 1 à 4, comprenant en outre :
la réception, en provenance d'un de l'au moins un fournisseur de services tiers, d'une demande de réception d'au moins une partie des données de l'utilisateur, la demande indiquant l'identifiant public temporaire de confiance qui est associé aux données de l'utilisateur ;
le mappage de l'identifiant public temporaire de confiance indiqué à l'utilisateur ;
la détermination si l'utilisateur consent à fournir au moins la partie demandée des données de l'utilisateur à l'un de l'au moins un fournisseur de services tiers ; et
sur la base au moins en partie de la détermination du consentement de l'utilisateur, l'une parmi la fourniture et la non fourniture d'au moins la partie demandée des données de l'utilisateur à l'un de l'au moins un fournisseur de services tiers.

12. Procédé selon l'une quelconque des revendications 1 à 11, dans lequel les données de l'utilisateur comprennent des informations personnelles de l'utilisateur qui sont utilisées pendant la transaction utilisateur.

13. Procédé selon la revendication 12, dans lequel les informations personnelles comprennent au moins un prénom, un nom de famille, une adresse physique, une adresse électronique, un numéro de téléphone, un numéro de sécurité sociale, des informations de compte bancaire, des informations de carte de crédit, un numéro de permis de conduire et un numéro d'assurance maladie.

14. Nœud de courtier de protection de données (14) comprenant un circuit de traitement (30), le circuit de traitement (30) étant configuré pour amener le nœud de courtier de protection de données (14) à :
a. effectuer une opération d'amorçage entre un utilisateur et le nœud de courtier de protection de données (14), pour initialiser une blockchain ;
b. à la suite de l'opération d'amorçage, obtenir un identifiant public temporaire de confiance identifiant l'utilisateur ;
c. recevoir une demande de nouvelle transaction associée à l'utilisateur et joindre la nouvelle transaction à la blockchain ; et
d. autoriser l'utilisateur à utiliser l'identifiant public temporaire de confiance pour effectuer une transaction utilisateur afin de protéger la confidentialité des données de l'utilisateur, le circuit de traitement (30) étant en outre configuré pour amener le nœud de courtier de protection de données (14) à :
ajouter un contrat intelligent à la blockchain, le contrat intelligent étant associé à l'identifiant public temporaire de confiance ;
utiliser l'identifiant public temporaire de confiance pour mapper le contrat intelligent aux données de l'utilisateur ; et
exécuter le contrat intelligent pour contrôler l'accès, par au moins un fournisseur de services tiers, à au moins une partie des données de l'utilisateur pendant la transaction utilisateur et selon au moins un terme du contrat intelligent, le circuit de traitement (30) étant configuré pour exécuter le contrat intelligent en étant configuré pour participer à la transaction utilisateur en communiquant avec l'au moins un fournisseur de services tiers au nom de l'utilisateur selon l'au moins un terme du contrat intelligent.
